# EUROPEAN PATENT SPECIFICATION

(11) **EP 2 978 710 B1**
(45) Date of publication and mention of the grant of the patent: **02.10.2019**
(21) Application number: 14713514.9
(22) Date of filing: 31.03.2014
(51) Int. Cl.: C01B 3/08, C01B 3/10

(54) **METHOD FOR PRODUCING HIGH-PURITY HYDROGEN GAS**
VERFAHREN ZUR HERSTELLUNG VON HOCHREINEM WASSERSTOFFGAS
PROCÉDÉ DE PRODUCTION DE GAZ HYDROGÈNE DE GRANDE PURETÉ

(30) Priority: 29.03.2013 EP 13305411
(43) Date of publication of application: 03.02.2016
(73) Proprietor: Centre National de la Recherche Scientifique (C.N.R.S.), 75016 Paris (FR); Université d'Aix Marseille, 13007 Marseille (FR)
(72) Inventor: BRUNET, Fabrice, F-38500 Coublevie (FR); MALVOISIN, Benjamin, F-38610 Gieres (FR); VIDAL, Olivier, F-38410 Saint Martin D'Uriage (FR); GOFFE, Bruno, F-13015 Marseille (FR)
(74) Representative: Hautier IP
(86) International application number: PCT/EP2014/056489
(87) International publication number: WO 2014/154910

(56) References cited:
- EP-A1- 1 386 881
- EP-A1- 1 516 853
- US-A- 3 442 619
- US-A- 5 830 426
- HIROYUKI MATSUURA ET AL: "Thermodynamic Calculation of Generation of H2 Gas by Reaction between FeO in Steelmaking Slag and Water Vapor", ISIJ INTERNATIONAL, vol. 52, no. 8, 1 January 2012 (2012-01-01), pages 1503-1512, XP055072253, ISSN: 0915-1559, DOI: 10.2355/isijinternational.52.1503
- DE WINDT L ET AL: "Kinetics of steel slag leaching: Batch tests and modeling", WASTE MANAGEMENT, ELSEVIER, NEW YORK, NY, US, vol. 31, no. 2, 1 February 2011 (2011-02-01), pages 225-235, XP027542656, ISSN: 0956-053X [retrieved on 2010-06-19]

## Description

### TECHNICAL FIELD

The present invention relates to a method for producing high-purity hydrogen gas below 500°C. More particularly, the present invention relates to a method for producing high-purity hydrogen gas by reacting steel slags, in particular wüstite contained in steel slags, with H₂O in hydrothermal conditions.

### BACKGROUND OF THE INVENTION

Hydrogen fuel cells are a promising technology for use as electrical power sources. With only water as by-product and no greenhouse gases emissions, hydrogen provides considerable environmental benefits.

Hydrogen can be produced in several ways. The steam-iron process is one of the oldest known methods for producing hydrogen. It is a cyclic process in which coal is gasified to a lean reducing gas comprising H₂ and CO. This gas then reacts with iron oxide, typically magnetite (Fe₃O₄), to produce a reduced form of iron oxide, wüstite (FeO) and/or iron metal (Fe). The reduced iron is then re-oxidized with steam to form magnetite and H₂. The steam-iron process takes place at temperatures ranging from 600 to 900°C or, eventually, at lower temperature when catalysts (e.g., transition metal or potassium hydroxyde) are added.or when the reactive surface area of the iron-bearing water-reducing material is increased, e.g., grinding.

Other hydrogen production technologies include fossil fuel reforming which can be applied to a large range of hydrocarbon feedstocks, including natural gas, heavy oils, solid biomass and coal. It produces about 95% of today's hydrogen production. CO₂ is generated as by-product. Other methods include thermochemical water splitting using nuclear or solar energy and water electrolysis. These known methods exhibit drawback, they are either expensive, high energy consuming or produce greenhouse gases.

Furthermore, it was found that hydrogen produced by some of these methods may comprise impurities. If hydrogen is to be used in hydrogen fuel cells, high degree of purity is critical as even trace amounts of impurities present in the hydrogen can poison the anode, membrane, and cathode of the fuel cell resulting in performance drops.

These past years, new routes were investigated to produce hydrogen. It was proposed to produce hydrogen by thermochemical decomposition of water using steel slags. Water is sprayed on molten slags (1600-1700°C) and a gas containing H₂ is produced. Although the proposed process offers a way to valorize steel slags, it produces hydrogen of low purity (only about 40% of H₂, the remaining being CH₄, CO₂, N₂ and CO) and may present safety risk as H₂ may explode at the working temperature. Furthermore, hydrogen produced by such a process may not be easy to collect and store.

Interest for steel slags as potential source of hydrogen is confirmed by a recently published study which deals with thermodynamic calculation of generation of hydrogen gas by reaction between FeO and water vapor (ISIJ International, Vol. 52, n°8, pp 1503-15212, 2012). In this study, the steel slags temperature ranges from 1873 to 1973 K. As indicated above, producing hydrogen at these high temperatures may present safety risks.

EP1386881 discloses a process for making hydrogen by reaction of iron or iron oxide with water.

Steel slags are by-products of steelmaking and steel refining processes. They may be generated from basic-oxygen-furnace (BOF) or electric-arc-furnace (EAF) steel making industries. In average, 110 kg of steel slags per ton of steel are produced. Yearly steel slags production in France reaches 1.2 Mt. Half of this production is wasted as steel slags are not attractively valorized up to now. So far steel slags are mainly used as road ballast or as land filler.

Therefore, there remains a need for a method that would allow producing high purity hydrogen at low cost without greenhouse gases emissions and which could advantageously allow valorizing attractively steel slags.

### SUMMARY OF THE INVENTION

The present invention relates to a method for producing hydrogen gas comprising the steps defined in claim 1.

### FIGURES

Fig. 1 represents hydrogen yield (L/kg slag) as a function of time in experiments conducted at 250°C / 500 bars by using either BOF steel slag or previously carbonated BOF steel slag (142 kg of CO2 per ton of slag).
Fig. 2 represents the average CH₄/H₂ ratio as a function of temperature in experiments using carbonated BOF powder as starting material.
Fig. 3 represents the relationship between the quantity of produced hydrogen and the Fe³⁺/Feₜₒₜ ratio derived from Rietveld analysis in the experimental products.

### DETAILED DESCRIPTION OF THE INVENTION

The inventors surprisingly found that production of high purity hydrogen gas may be achieved by a method comprising the steps defined in claim 1.

Hydrogen gas produced by the method of the present invention exhibits a molar purity of at least 99.9%. In some embodiments, a molar purity of at least 99.995% may be achieved.

As indicated above, steel slags are by-products of steelmaking and steel refining processes. Typically, they contain at least 5 wt% of wüstite and may comprise up to 40 wt% of wüstite. In average, they contain from 10 to 20 wt% of wüstite. Steel slags may also comprise iron metal. When present, iron metal will advantageously contribute to the production of hydrogen.

Steel slags used in the method of the present invention have solidified upon cooling after they have been drawn off the furnace. They can therefore either be fresh slags with temperatures still around 500°C or they can be disposed steel slags at ambient temperature (15-25°C) or before total cooling. Thus, steel slags for use in the method of the present invention may have a temperature ranging from 15°C to ca. 500°C. Advantageously, steel slags used in the method of the present invention may be steel slags which have been disposed for days, weeks, months or even years in the open landfills, herein referred as "disposed steel slags". Suitable steel slags for use in the method of the present invention include steel slags generated from basic-oxygen-furnace (BOF) or from electric-arc-furnace (EAF) steel making industries, referred herein as BOF steel slags or EAF steel slags. BOF steel slags or EAF steel slags may be disposed steel slags. Other suitable steel slags include carbonated steel slags such as carbonated BOF slags or carbonated EAF slags.

Reaction of H₂O with wüstite contained in the steel slags in the herein mentioned conditions induces oxidation of FeO and reduction of H₂O according to the following reaction:
3 FeO + H₂O => Fe₃O₄ + H₂

"Reacting with H₂O" as indicated herein means reacting with either liquid or vapor H₂O.

Step (a) is carried out in liquid water under pressure. The working pressure is such that H₂O partly remains in the liquid state at the working temperature (from 150°C to 500°C). The pressure has no substantial influence on the kinetics of hydrogen gas production.

Step (a) may be carried out on carbonated steel slags. Thus, steel slags which are carbonated upon aging (in air) may be advantageously used in the method of the present invention.

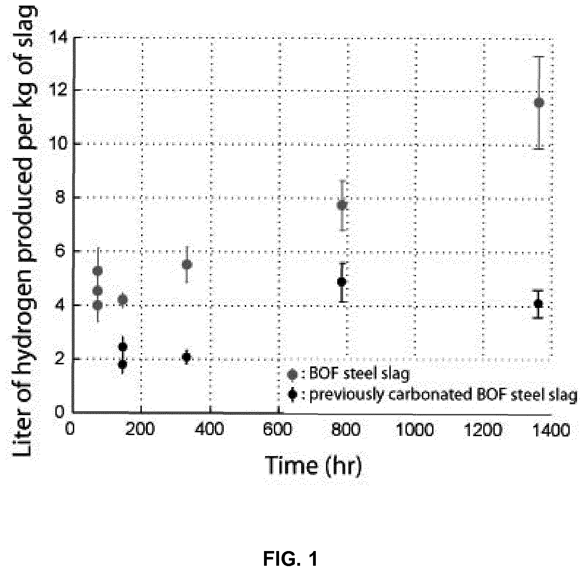

The method of the present invention may also comprise the step of carbonating steel slags prior to step (a). Carbonation may be achieved by injecting CO₂ into the reactor. Carbonation allows to reduce pH and advantageously to sequester CO₂. Thus, step (a) may be carried out over a broad range of pH. Though carbonation is compatible with the method of the present invention, the inventors found that slags carbonation reduces the kinetics of hydrogen production at temperature below 400°C (Figure 1) and increases production of CH₄ (Table 1). Indeed, these carbonated materials produce CH₄ in concentrations by one to two orders of magnitude higher. The formation of CH₄ is due to the reaction between H₂ and CO₂ which occurs during the thermal breakdown of carbonates, in particular that of ferrous carbonates. However, hydrogen of lower purity is obtained (purity above 98 %).

The production of hydrogen gas increases with temperature and reaction duration.

Indeed, temperature influences the kinetics of hydrogen production since step (a) is thermally activated. For instance, the production of hydrogen gas can be increased by a factor of three when carrying out step (a) at 400°C instead of 250°C. However, temperature increase negatively impacts hydrogen purity. Indeed, the inventors found that methane production is increased by one to two orders of magnitude when temperature is increased. The molar purity of hydrogen produced at 250°C is higher than 99.995 % whereas at 400°C, after water removal, the hydrogen molar purity is higher than 99.9%. Thus, when high-purity of hydrogen is particularly sought, step (a) may be carried out at a temperature preferably ranging from 150°C to 350°C, more preferably from 200°C to 300°C. When hydrogen purity is of less importance, step (a) may be carried out at a temperature preferably ranging from 360°C to 500°C, more preferably from 400°C to 450°C.

As mentioned above, the production of hydrogen gas increases with reaction duration. Step (a) duration may vary from a few hours when the reaction is carried out at high temperature to several days when the reaction is carried out at low temperature. It is within the abilities of a skilled person to adapt the reaction duration depending on the working temperature, the starting material and/or the desired production of hydrogen gas. In some embodiments, the material may be reacted with H₂O for at least 1 hour or at least 5 hours or at least 10 hours or at least 24 hours. In some embodiments, the material may be reacted with H₂O for up to 60 days.

The energy required to heat the wüstite-bearing H₂-producing material, in particular steel slags, from 25°C to 150°C-500°C may be recycled from steelmaking or steel refining plants. Thus, advantageously, the method of the present invention will be carried out nearby a steelmaking or steel refining plant.

Prior to step (a), the steel slag may be crushed to increase H₂ production kinetics. For instance, particle sizes ranging from 10 nm to 100 µm, preferably from 10 nm to 50 µm obtained by crushing may increase H₂ production kinetics by a factor of 1.4 to 1.7. Nevertheless, crushing is not needed to achieve good yields of hydrogen gas production. Thus, preferably, the method of the present invention does not comprise a crushing step.

In step (b), cooling down the reaction product of step (a), i.e. the gas product of step (a), preferably to room temperature, allows separation of H₂ gas from water steam which condensates. Thus, cooling the gas product of step (a) allows condensing water. The heat of the gases may be extracted through a thermal exchanger and re-used in the process (step a) or in another process. Depending on slag quantity and temperature, the man skilled in the art will determine the appropriate process to manage the heat recovery. In another embodiment gases cool down slowly.

High-purity hydrogen is recovered after removing steam from the gas by condensation.

The amount of produced hydrogen can be measured through magnetic measurements as production of hydrogen is proportional to the production of magnetite (see examples section: solid characterization) or by gas chromatography.

Magnetic measurement is a particularly preferred method for monitoring hydrogen production. The magnetic measurement method comprises the steps of:
(i) collecting solid reaction product obtained after step (a), in particular after reacting wüstite contained in steel slags, with H₂O at a temperature ranging from 150°C to 500°C;
(i') optionally drying said solid reaction product, preferably in air at 80°C for 48 hours;
(ii) measuring saturation magnetization (Js) of said solid reaction product;
(iii) applying a proportionality factor (92 A.m².kg) to convert the Js measurement into a quantity of magnetite;
(iv) converting the calculated quantity of magnetite into quantity of hydrogen.

The invention also encompasses a method for monitoring hydrogen production as described herein above.

The method for producing hydrogen gas of the present invention may be carried out in batch or in continuous manner (also referred to as flow through). In a continuous or flow through method, H₂ gas may be extracted from the reactor as soon as produced.

A method comprising the steps of:
(a) reacting steel slags with H₂O at a temperature ranging from 150°C to 500°C for at least 10 hours ;
(b) cooling down the reaction product of step (a) to separate hydrogen gas from water steam ;
(c) collecting hydrogen gas;
allows producing up to 25L or 30L of H₂ per kg of slags.

For instance, when BOF steel slags are reacted at 250°C, the method allows producing 5L of H₂ per kg of slag (Figure 1). At 250°C and after 70 h, the amount of conversion was found to be about 20 molar %. The amount of conversion reached 40 - 50 molar % for 1360 h at 250°C and for 70 h at 400°C. Potentially, the reaction of all the ferrous iron contained in the BOF steel slag could produce 0.9 mole H₂ or 22 NL per kg.

The reaction is performed without adding catalysts.

The required energy to heat the slag adiabatically from 25°C to 250°C is about 200 kJ/kg. This energy can be compared to the energy that can be recovered from the produced hydrogen at the same temperature (∼ 0.2 mol/kg, i.e. 50 kJ/kg). Thus, the efficiency of the method of the present invention is of ca. 25 % at 250°C considering only the energy required for heating the slag. This efficiency falls in the range of other production methods which have typical efficiencies comprised between 9 and 85 % with the highest efficiency attained with steam reforming. The efficiency can be improved if higher conversion is reached or if the heat associated with lime hydration (∼ 300 kJ/kg of fresh slag) is recovered.

The annual worldwide production of BOF and EAF steel slags is over 47 Million tons. Considering a total conversion of these steel slags (0.9 mol (or 22 NL) of H₂ per kg), the method of the present invention has the potential for producing 85,000 tons of hydrogen per year. Nowadays, approximately 2 % of the global hydrogen production (i.e. 2 % of 69 Million tons per year [29]) is achieved according to processes which do not release CO₂ in the atmosphere (water electrolysis, thermochemical water splitting, thermocatalytic methane decomposition,...). Consequently, the method of the present invention could supply 5 - 10 % of the annual production of hydrogen produced without CO₂ emission or even with a negative CO₂ balance if slag carbonation is associated with this method.

The method of the present invention may be performed in a suitable reactor. The steel-slags may be introduced in the reactor in the form of suspension (fluidized bed).

In the method of the present invention, steel slags which are by-products of the steel industry may be advantageously directly used for H₂ gas production, i.e., without grinding and without the addition of catalysts (e.g., transition metal - hydroxides). Furthermore, the method of the present invention allows producing hydrogen gas from disposed steel slags, such as landfill disposed steel slags. The thermal energy required to achieve H₂ production may be advantageously recycled from steelmaking or steel refining plants. The hydrogen production potential can be evaluated using a magnetic method.

Furthermore, hydrogen produced by the method of the present invention can be easily collected and stored.

Advantageously, the by-products of the present method may be used as aggregates. Indeed, contrary to steel slags, the by-products of the present method no longer exhibit a propensity to expand.

### EXAMPLES

### Preparation of crushed basic oxygen furnace steel slag (CBOF)

A Basic Oxygen Furnace (BOF) steel slag was used as a starting material. The BOF steel slag was crushed for ten minutes in a mortar grinder (Retsch® RM100). A powder with a particle size ranging from below 10 nm to 50 µm was obtained, referred to herein as CBOF. The particle size was inferred from SEM observations.

Major and minor element composition and iron speciation were determined by ICP-OES, X-ray diffraction, SEM and EXAFS ([1], [2], [3], [4]).

The major element composition of the BOF slag is: CaO (44.7 wt.%), FeO (20.58 wt.%), Fe₂O₃ (3.16 wt.%), Fe (2.7 wt.%), SiO₂ (7.6 wt.%), MnO (2.86 wt.%), MgO (4.9 wt.%), Al₂O₃ (1.2 wt.%) and P₂O₅ (1.61 wt.%).

### Preparation of carbonated crushed basic oxygen furnace steel slag (CARBOF)

The steel slag was reacted with CO₂ following the procedure described in [5].

Twenty grams of the crushed steel slag (CBOF) were loaded in a 2 L hastelloy PARR® autoclave together with 1 L of de-ionized water (resistivity of 18.2 MΩ.cm). The experiment was conducted at room temperature (23 ± 1°C) for 6 days under constant stirring. After dispersion of the BOF steel slag into water, CO₂ was injected in the reactor to reach an initial pressure of twenty bars.

### Production of hydrogen

32 experiments were carried out (see Table 1).

BOF slag (BOF), crushed BOF slag (CBOF) or carbonated BOF slag (CARBOF, containing up to 142 ± 2 CO₂ g/kg) powders were loaded in 2 to 3 centimeters length gold tube (4.0 mm outer diameter and 3.6 mm inner diameter) with de-ionized water (resistivity of 18.2 MΩ.cm) in a water to solid mass ratio ranging from 0.15 to 5.6. The capsules were welded shut and placed in horizontal cold-seal pressure vessels. Run temperatures, ranging from 200 to 400°C, were measured with a Ni-NiCr thermocouple and regulated to within 1°C (see [6]). A pressure of 50 MPa was applied to all experiments by pumping either argon or water into the vessel. The experiments were finally quenched and both gas and solid analyzed.

H₂ was produced in all experiments. Up to 0.42 and 0.32 mole of H₂ per kg of reactant was produced in COLAC8 and COLAC12 at 523 and 673 K for 1362 and 43 h, respectively. CH₄ was detected in all CARBOF experiments but COLACE116, with an average molar CH₄/H₂ ratio of ca. 0.016.

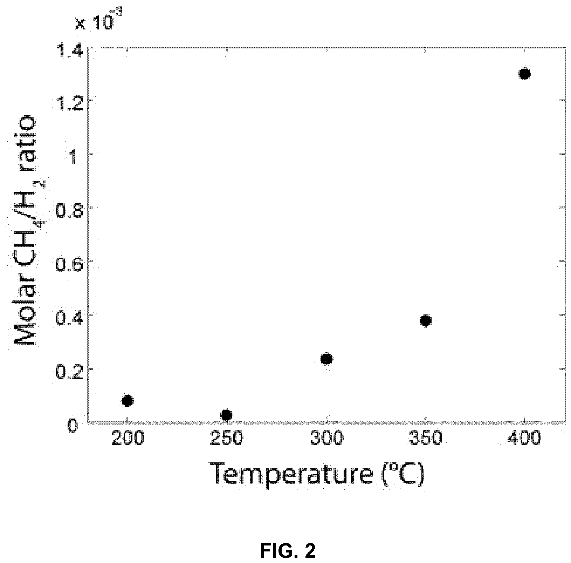

In BOF and CBOF, CH₄ production is one to two orders of magnitude lower and the averaged CH₄/H₂ ratio increases from 7.10⁻⁵ at 200°C to 1.3.10⁻³ at 400°C (Figure 2).

Concentrations of CO₂ close to the detection limit of the GC were also detected in one CBOF experiment and in three CARBOF experiments (Table 1).

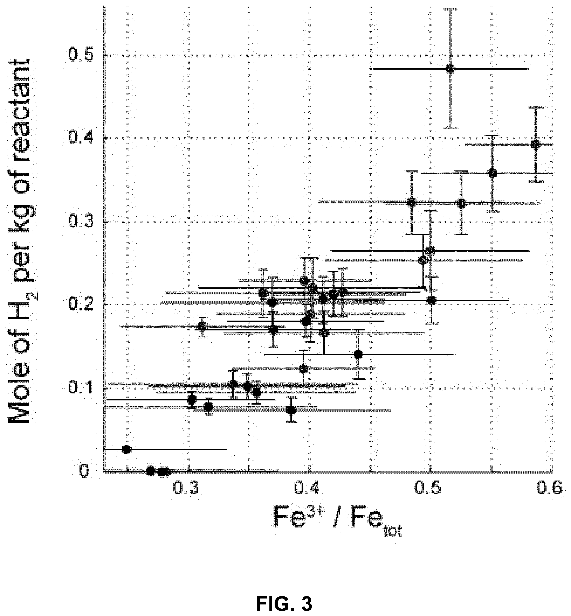

Figure 3 shows that hydrogen production is clearly correlated to the increase of Fe³⁺ proportion in the powder. The main Fe³⁺-bearing phase that was produced during the experiments is magnetite which can be precisely quantified by magnetic measurements according to the method described herein below.

Magnetite was mainly produced through the oxidation of wüstite. One mole of hydrogen should be produced per mole of magnetite. This mass balance relationship is verified in all experiments, i.e. either BOF/CBOF or CARBOF. H₂ production results directly from the oxidation of wüstite.

**Table 1: M reactant, initial mass of reactant; M water, initial mass of water; Jrs, saturation remanent magnetization; Js, saturation magnetization; Hcr, remanent coercivity; Hc, intrinsic coercivity; M magnetite, total mass of produced magnetite; H₂ MAG, amount of hydrogen produced deduced from the magnetic measurement; H₂ GC, amount of hydrogen produced deduced from gas chromatography; CH₄, amount of methane produced deduced from gas chromatography measurement; CO₂, detection of carbon dioxide with gas chromatography.**

| **Run n°** | **Reactant** | **M reactant** | **M water** | **Temperature** | **Duration** | **Jrs/Js** | **Hcr/Hc** | **Js** | **M magnetite** | **H₂ MAG** | **H₂ GC** | **CH₄** | **CO₂** |
|---|---|---|---|---|---|---|---|---|---|---|---|---|---|
| | | **mg** | **mg** | **K** | **hr** | | | **µA,m2** | **wt. %** | **mol/kg** | **mol/kg** | **10⁻⁴mol/kg** | |
| Initial Powder | CBOF | | | | | 0.050 | 7.14 | | 2.21 | | | | |
| COLAC2 | CBOF | 74.2 | 80.4 | 573 | 162.7 | 0.219 | 2.09 | 436.9 | 11.25 | 0.362 | 0.358 | 0.705 | X |
| COLAC3 | CBOF | 102.6 | 20.0 | 573 | 216.0 | 0.235 | 1.96 | 556.6 | 13.29 | 0.450 | 0.393 | 1.470 | |
| COLAC4 | CBOF | 84.8 | 40.3 | 523 | 70.4 | 0.183 | 2.60 | 291.2 | 7.32 | 0.192 | 0.167 | n.d. | |
| COLAC5 | CBOF | 77.6 | 80.7 | 523 | 70.4 | 0.178 | 2.68 | 281.8 | 6.48 | 0.156 | 0.189 | n.d. | |
| COLAC6 | CBOF | 47.9 | 119.6 | 523 | 70.4 | 0.176 | 2.61 | 205.7 | 7.06 | 0.181 | 0.220 | n.d. | |
| COLAC7 | CBOF | 41.6 | 231.3 | 523 | 142.8 | 0.171 | 2.63 | 208.5 | 7.69 | 0.208 | 0.174 | n.d. | |
| COLAC8 | CBOF | 81.9 | 80.6 | 523 | 1362.0 | 0.200 | 2.19 | 412.0 | 12.5 | 0.416 | 0.484 | n.d. | |
| COLAC9 | CBOF | 81.4 | 80.5 | 523 | 329.3 | 0.159 | 2.70 | 511.9 | 9.01 | 0.265 | 0.229 | n.d. | |
| COLAC10 | CBOF | 81.6 | 80.3 | 623 | 65.3 | 0.213 | 2.09 | 439.8 | 10.9 | 0.346 | 0.254 | 0.962 | |
| COLAC11 | CBOF | 85.9 | 80.6 | 473 | 497.0 | 0.178 | 3.01 | 223.9 | 5.59 | 0.117 | 0.214 | n.d. | |
| COLAC12 | CBOF | 94.0 | 80.4 | 673 | 43.2 | 0.213 | 2.26 | 497.0 | 9.77 | 0.298 | 0.323 | 5.342 | |
| COLAC14 | CBOF | 83.6 | 80.7 | 523 | 785.7 | 0.218 | 2.20 | 481.8 | 9.54 | 0.288 | 0.323 | 0.717 | |
| COLAC15 | CBOF | 81.1 | 80.3 | 573 | 66.0 | 0.189 | 2.47 | 238.9 | 7.59 | 0.203 | 0.215 | 0.296 | |
| COLAC17 | CBOF | 81.1 | 81.0 | 473 | 69.2 | 0.098 | 4.10 | 237.9 | 5.49 | 0.113 | 0.105 | 0.167 | |
| COLAC18 | CBOF | 80.6 | 80.4 | 673 | 68.3 | 0.224 | 2.14 | 420.0 | 10.10 | 0.312 | 0.265 | 3.376 | |
| OL2C1 | BOF | 81.33 | 80.62 | 673 | 68.3 | 0.249 | 1.99 | 307.0 | 8.17 | 0.229 | 0.124 | 1.242 | |
| OL2C2 | BOF | 86 | 80.2 | 523 | 690.1 | 0.250 | 2.11 | 275.8 | 5.46 | 0.111 | 0.206 | n.d. | |
| Initial Powder | CARBOF | | | | | 0.064 | 5.74 | | 1.28 | | | | |
| COLACE11 | CARBOF | 95.49 | 14.98 | 473 | 167.6 | 0.156 | 2.49 | 274.5 | 5.39 | 0.023 | 0.027 | 3.399 | X |
| COLACE12 | CARBOF | 63.33 | 60.27 | 573 | 141.1 | 0.222 | 2.12 | 234.8 | 9.73 | 0.210 | 0.141 | 3.059 | X |
| COLACE14 | CARBOF | 40.93 | 110.9 | 523 | 142.8 | 0.200 | 2.21 | 175.9 | 7.60 | 0.118 | 0.102 | 1.753 | |
| COLACE16 | CARBOF | 78.45 | 40.06 | 523 | 142.8 | 0.198 | 2.26 | 354.1 | 6.68 | 0.079 | 0.074 | 1.489 | |
| COLACE17 | CARBOF | 79.1 | 80.03 | 523 | 1362.0 | 0.201 | 2.27 | 359.0 | 8.91 | 0.175 | 0.171 | 1.663 | |
| COLACE18 | CARBOF | 81.12 | 80.29 | 523 | 329.3 | 0.169 | 2.52 | 357.4 | 7.65 | 0.121 | 0.086 | 1.391 | |
| COLACE19 | CARBOF | 80.12 | 80.3 | 623 | 65.3 | 0.214 | 2.16 | 450.1 | 9.07 | 0.182 | 0.181 | 2.137 | |
| COLACE110 | CARBOF | 79.65 | 80.59 | 473 | 497.0 | 0.179 | 2.54 | 287.9 | 6.22 | 0.059 | 0.078 | 0.890 | |
| COLACE111 | CARBOF | 80.17 | 80.31 | 673 | 43.2 | 0.221 | 2.33 | 456.1 | 9.67 | 0.208 | 0.213 | 6.025 | |
| COLACE112 | CARBOF | 80.96 | 80.11 | 523 | 785.7 | 0.205 | 2.31 | 326.1 | 7.54 | 0.116 | 0.203 | 1.981 | |
| COLACE114 | CARBOF | 82.48 | 80.32 | 573 | 66.0 | 0.198 | 2.38 | 272.2 | 7.37 | 0.118 | 0.095 | 0.830 | |
| COLACE115 | CARBOF | 84.02 | 80.25 | 673 | 66.2 | 0.200 | 2.31 | 535.9 | 12.95 | 0.349 | 0.206 | 3.860 | X |
| COLACE116 | CARBOF | 82.26 | 80.2 | 473 | 69.2 | 0.118 | 3.17 | 164.6 | 4.02 | 0.000 | 0.001 | n.d. | |

### GC analysis

Gas sampling for gas chromatography (GC) analysis was achieved by placing the gold capsule in a syringe equipped with an indenter and a three-way tap. A Clarus 500 gas chromatograph (PerkinElmer®) equipped with a thermal conductivity detector was used. The syringe was filled with the same gas as the gas carrier of the GC (Ar, 99.995 %). Before piercing the capsule, a blank measurement was carried out on Ar injected in the syringe. Then, the capsule was pierced and the experimental gas produced released in the syringe. The gas mixture (argon + sampled gas) was sampled through the septum placed on one way of the tap and analyzed by GC. This latter procedure was repeated three times to verify the homogeneity of the gas mixture and the reproducibility of the measurement. The gas purity (volume proportion) is calculated as H₂ / (H₂ + CO + CO₂ + CH₄), i.e; the only gases produced in the experiments that are observed with the GC.

### Solid characterization

The recovered solid products were first dried for 48 h in air at 80°C. The X-ray patterns were analyzed with Rietveld using the BGMN software ([7]). Portlandite, magnetite, wüstite, calcite, lime and α-ferrite were refined using the internal structure database of BGMN whereas the crystal structures given by [8], [9] and [10] were used for larnite, brownmillerite and hibschite, respectively.

The amount of magnetite produced by ferrous iron oxidation was estimated from the saturation magnetization (Js) of the sample ([11]). Js was measured using a Princeton Micromag Vibrating Sample Magnetometer 3900 at IPGP, Paris. A proportionality factor of 92 A.m²/kg was used to convert the Js signal into a quantity of magnetite ([12]).

### REFERENCES

[1] Chaurand P, Rose J, Bottero J-Y, Domas J. Speciation of Cr and V within BOF steel slag reused in road constructions. J. Geochem. Explor. 2006;88:10-14.
[2] Chaurand P, Rose J, Briois V et al. New methodological approach for the vanadium Kedge X-ray absorption near-edge structure interpretation: Application to the speciation of vanadium in oxide phases from steel slag . J. Phys. Chem. B 2007;111:5101-5110.
[3] Chaurand P, Rose J, Briois V et al. Environmental impacts of steel slag reused in road construction: A crystallographic and molecular (XANES) approach. J. Hazard. Mater. 2007;139:537-542.
[4] de Windt L, Chaurand P, Rose J. Kinetics of steel slag leaching: Batch tests and modeling. Waste Manage. 2011;31:225-235.
[5] Montes-Hernandez G, Perez-Lopez R, Renard F, Nieto JM, Charlet L. Mineral sequestration of CO2 by aqueous carbonation of coal combustion fly-ash. J. Hazard. Mater. 2009; 161 :1347-1354.
[6] Brunet F, Chopin C. Bearthite, Ca2Al(PO4)2(OH): Stability, thermodynamic properties and phase relations. Contrib. Mineral. Petrol. 1995;121:258-266.
[7] Taut T, Kleeberg R, Bergmann J. The new Seifert Rietveld program BGMN and its application to quantitative phase analysis. Mater. Struc. 1998;5:57-66.
[8] Saalfeld H, Klaska, KH. The crystal structure of 6 Ca2SiO4 . 1 Ca3(PO4)2. Zeitschrift für Kristallographie 1981;155:65-73.
[9] Colville AA, Geller S. The crystal structure of brownmillerite, Ca2FeAlO5. Acta Cryst. 1971 ;B27:2311-2315.
[10] Basso R, Giusta AD, Zefiro L. Crystal structure refinement of plazolite: a highly hydrated natural hydrogrossular. Neues Jahrbuch für Mineralogie 1983;251-258.
[11] Malvoisin B, Carlut C, Brunet F. Serpentinization of oceanic peridotites: 1. A high-sensitivity method to monitor magnetite production in hydrothermal experiments. J. Geophys. Res. 2012;117:B01104.
[12] Marbán G, Valdés-Solís T. Towards the hydrogen economy? Int. J. Hydrogen Energ. 2007;32: 1625:1637.

## Claims

1. A method for producing hydrogen gas comprising the steps of:
(a) reacting steel slags containing wüstite with liquid water under pressure defined to maintain the water in a liquid state at a temperature ranging from 150°C to 500°C;
(b) cooling down the reaction product of step (a) to separate hydrogen gas from water steam ;
(c) collecting hydrogen gas;
the method being performed without adding catalysts.

2. The method according to claim 1 wherein said steel slags further comprises iron metal.

3. The method according to any of the preceding claims wherein steel slags to be reacted in step (a) have a temperature ranging from 15°C to 500°C.

4. The method according to any of the preceding claims wherein step (a) is carried out at a temperature ranging from 150°C to 350°C.

5. The method according to any of the preceding claims wherein said steel slags are selected from basic oxygen furnace steel slags or electric arc furnace steel slags.

6. The method according to any of the preceding claims wherein prior to step (a) said steel slags are carbonated.

7. The method according to claim 6 wherein said carbonation is carried out by injecting C02 in the reactor in which the method is carried out.

8. The method according to any of the preceding claims wherein the method is carried out in batch.

9. The method according to any of claims 1 to 7 wherein the method comprises the step of collecting and extracting hydrogen gas as soon as produced.

10. The method according to any of claims 1 to 9 wherein said steel slags are crushed prior to step (a).

11. The method according to any of the preceding claims wherein the reaction duration of step (a) is at least 1hour.

12. The method according to any of the preceding claims wherein the hydrogen purity is higher than 99.9 molar%.

13. The method according to any of the preceding claims wherein the hydrogen purity is higher than 99.995 molar %.

14. The method according to any of the preceding claims wherein hydrogen production is monitored by a magnetic measurement method comprising the steps of:
(i) collecting solid reaction product obtained after step a);
(ii) measuring saturation magnetization (Js) of said solid reaction product;
(iii) applying a proportionality factor to convert the Js measurement into a quantity of magnetite;
(iv) converting the calculated quantity of magnetite into quantity of hydrogen.

## Patentansprüche

1. Verfahren zum Herstellen von Wasserstoffgas, umfassend die Schritte des:
(a) Umsetzens von Wüstit enthaltenden Stahlschlacken mit flüssigem Wasser unter Druck, der definiert ist, um das Wasser bei einer Temperatur im Bereich von 150 °C bis 500 °C in einem flüssigen Zustand zu halten;
(b) Abkühlens des Reaktionsprodukts aus Schritt (a), um Wasserstoffgas von dem Wasserstrom zu trennen;
(c) Sammelns von Wasserstoffgas;
wobei das Verfahren ohne das Hinzufügen von Katalysatoren durchgeführt wird.

2. Verfahren nach Anspruch 1, wobei die Stahlschlacke weiter Eisenmetall umfassen.

3. Verfahren nach einem der vorstehenden Ansprüche, wobei in Schritt (a) umzusetzende Stahlschlacke eine Temperatur im Bereich von 15 °C bis 500 °C aufweisen.

4. Verfahren nach einem der vorstehenden Ansprüche, wobei Schritt (a) bei einer Temperatur im Bereich von 150 °C bis 350 °C ausgeführt wird.

5. Verfahren nach einem der vorstehenden Ansprüche, wobei die Stahlschlacke ausgewählt werden aus Linz-Donawitz-Ofen-Stahlschlacken oder Elektrolichtbogenofen-Stahlschlacken.

6. Verfahren nach einem der vorstehenden Ansprüche, wobei vor Schritt (a) die Stahlschlacke carbonisiert werden.

7. Verfahren nach Anspruch 6, wobei die Carbonisierung durch Einspritzen von C02 in den Reaktor, in dem das Verfahren ausgeführt wird, ausgeführt wird.

8. Verfahren nach einem der vorstehenden Ansprüche, wobei das Verfahren chargenweise ausgeführt wird.

9. Verfahren nach einem der Ansprüche 1 bis 7, wobei das Verfahren den Schritt des Sammelns und Extrahierens von Wasserstoffgas, sobald produziert, umfasst.

10. Verfahren nach einem der Ansprüche 1 bis 9, wobei die Stahlschlacke vor Schritt (a) zerkleinert werden.

11. Verfahren nach einem der vorstehenden Ansprüche, wobei die Reaktionsdauer von Schritt (a) mindestens 1 Stunde beträgt.

12. Verfahren nach einem der vorstehenden Ansprüche, wobei die Wasserstoffreinheit höher ist als 99,9 Mol-%.

13. Verfahren nach einem der vorstehenden Ansprüche, wobei die Wasserstoffreinheit höher ist als 99,995 Mol-%.

14. Verfahren nach einem der vorstehenden Ansprüche, wobei die Wasserstoffproduktion durch ein magnetisches Messverfahren überwacht wird, umfassend die Schritte des:
(i) Sammelns fester, nach Schritt a) erhaltener Reaktionsprodukte;
(ii) Messens von Sättigungsmagnetisierung (Js) des festen Reaktionsprodukts;
(iii) Anwendens eines Proportionalitätsfaktors, um die Js-Messung in eine Quantität an Magnetit umzuwandeln;
(iv) Umwandelns der berechneten Quantität an Magnetit in Quantität an Wasserstoff.

## Revendications

1. Procédé de production d'hydrogène gazeux comprenant les étapes de :
(a) mise en réaction de scories d'acier contenant de la wustite avec de l'eau liquide sous une pression définie pour maintenir l'eau dans un état liquide à une température allant de 150 °C à 500 °C ;
(b) refroidissement du produit de réaction de l'étape (a) pour séparer l'hydrogène gazeux de la vapeur d'eau ;
(c) collecte d'hydrogène gazeux ;
le procédé étant réalisé sans ajout de catalyseurs.

2. Procédé selon la revendication 1, dans lequel lesdites scories d'acier comprennent en outre du fer métallique.

3. Procédé selon l'une quelconque des revendications précédentes, dans lequel les scories d'acier à mettre à réagir dans l'étape (a) ont une température allant de 15 °C à 500 °C.

4. Procédé selon l'une quelconque des revendications précédentes, dans lequel l'étape (a) est réalisée à une température allant de 150 °C à 350 °C.

5. Procédé selon l'une quelconque des revendications précédentes, dans lequel lesdites scories d'acier sont choisies parmi des scories d'acier de convertisseur basique à oxygène ou des scories d'acier de four électrique à arc.

6. Procédé selon l'une quelconque des revendications précédentes, dans lequel avant l'étape (a), lesdites scories d'acier sont carbonatées.

7. Procédé selon la revendication 6, dans lequel ladite carbonatation est réalisée en injectant du CO₂ dans le réacteur dans lequel est réalisé le procédé.

8. Procédé selon l'une quelconque des revendications précédentes, dans lequel le procédé est réalisé en discontinu.

9. Procédé selon l'une quelconque des revendications 1 à 7, dans lequel le procédé comprend l'étape de collecte et d'extraction d'hydrogène gazeux dès que produit.

10. Procédé selon l'une quelconque des revendications 1 à 9, dans lequel lesdites scories d'acier sont écrasées avant l'étape (a).

11. Procédé selon l'une quelconque des revendications précédentes, dans lequel la durée de réaction de l'étape (a) est d'au moins 1 heure.

12. Procédé selon l'une quelconque des revendications précédentes, dans lequel la pureté d'hydrogène est plus élevée que 99,9 % molaire.

13. Procédé selon l'une quelconque des revendications précédentes, dans lequel la pureté d'hydrogène est plus élevée que 99,995 % molaire.

14. Procédé selon l'une quelconque des revendications précédentes, dans lequel la production d'hydrogène est surveillée par un procédé de mesure magnétique comprenant les étapes de :
(i) collecte du produit de réaction solide obtenu après l'étape a) ;
(ii) mesure de l'aimantation à saturation (Js) dudit produit de réaction solide ;
(iii) application d'un facteur de proportionnalité pour convertir la mesure de Js en une quantité de magnétite ;
(iv) conversion de la quantité de magnétite calculée en quantité d'hydrogène.
